# FASCICULE DE BREVET EUROPEEN

(11) **EP 0 991 887 B1**
(45) Date de publication et mention de la délivrance du brevet: **22.09.2004**
(21) Numéro de dépôt: 99914629.3
(22) Date de dépôt: 20.04.1999
(51) Int. Cl.: F16K 17/04, F16K 24/04, E21B 34/04

(54) **SOUPAPE DIFFERENTIELLE POUR CONDUITE FLEXIBLE SOUS-MARINE**
DIFFERENTIALVENTIL FÜR FLEXIBLE UNTERWASSERLEITUNG
DIFFERENTIAL RELIEF VALVE FOR FLEXIBLE SEA LINE

(30) Priorité: 27.04.1998 FR 9805260
(43) Date de publication de la demande: 12.04.2000
(73) Titulaire: TECHNIP FRANCE, 92400 Courbevoie (FR)
(72) Inventeur: LE NOUVEAU, Joel, F-76480 Yainville (FR); RETAILLEAU, Pascal, F-59700 Marcq en Baroeul (FR)
(74) Mandataire: Levy, David
(86) Numéro de dépôt international: PCT/FR1999/000936
(87) Numéro de publication internationale: WO 1999/056045

(56) Documents cités:
- CH-A- 550 957
- GB-A- 2 018 399
- US-A- 2 420 370

## Description

La présente invention concerne une soupape différentielle pour conduite flexible sous-marine et, plus particulièrement, une soupape à deux clapets apte à évacuer du gaz, par exemple contenu dans un fluide sous pression circulant dans la conduite flexible. Une telle soupape est connue par US 2 420 370.

Dans les conduites flexibles utilisées dans des forages pétroliers en mer notamment, circule un fluide sous pression qui peut contenir du gaz qu'il faut évacuer dans le milieu ambiant. Ce gaz diffuse généralement dans un annulaire de la conduite flexible. Pour l'évacuation du gaz, il est usuel de monter à au moins une des extrémités une soupape de drainage, un côté de ladite soupape communiquant avec au moins l'annulaire alors que l'autre côté communique avec le milieu ambiant qui peut être l'atmosphère lorsque la soupape est montée à l'extrémité de la conduite située au-dessus de la surface de l'eau, ou l'eau de mer lorsque ladite soupape est montée près de l'extrémité immergée de la conduite flexible.

De telles soupapes sont destinées à s'ouvrir dès que la pression interne régnant dans l'annulaire est supérieure à une certaine valeur à la pression régnant à l'extérieur de ladite conduite flexible, cette différence de pression pouvant varier entre 1 et 4 bars par exemple.

Parmi les soupapes utilisées dans les conduites flexibles sous-marines, on peut citer celle comprenant un corps de soupape en deux parties dans le fond duquel débouchent deux conduits de passage, un clapet sollicité vers la position de fermeture par un ressort taré, un joint d'étanchéité relativement large, épais et qui est encastré dans l'extrémité inférieure du clapet, et une membrane souple, sous forme de couronne, dont la périphérie extérieure est pincée entre les deux parties du corps de soupape et dont la périphérie intérieure est pincée entre deux parties constituant le corps de clapet. De ce fait, deux chambres supérieure et inférieure sont ménagées dans le corps de soupape, lesdites chambres étant isolées l'une de l'autre par la membrane souple et déformable. La chambre supérieure de la soupape est constamment remplie par le milieu ambiant, air ou eau, qui peut être chargé ou non d'impuretés en suspension.

Lorsque les impuretés sont non corrosives ou abrasives, les éléments constitutifs ne sont pas beaucoup attaqués et ne se grippent pas trop vite. Par contre, lorsque ces impuretés sont constituées par du sable, ce qui est notamment le cas lorsque la soupape se trouve à proximité du fond marin ou du rivage, alors il se produit une usure prématurée desdits éléments constitutifs et même un grippage de certains d'entre eux conduisant parfois à un arrêt du fonctionnement de la soupape.

Un autre inconvénient de ce type de soupape réside dans le fait qu'il est nécessaire de procéder à un appairage entre les éléments qui doivent coopérer entre eux. En effet, chacun des éléments constitutifs est fabriqué avec une certaine tolérance. Lorsqu'on appaire deux éléments, il est impératif de les appairer avec la même tolérance de fabrication. Un tel appairage est coûteux puisque nécessairement il y a des éléments qui ne sont pas utilisés.

La présente invention a pour but de remédier aux inconvénients précités en proposant une soupape différentielle qui soit fiable sans risque de détérioration des éléments constitutifs consécutive à l'introduction de particules corrosives et/ou abrasives et qui ne nécessite pas un appairage entre les éléments consécutifs.

Un objet de la présente invention est une soupape différentielle, telle que définie dans la revendication annexée 1.

Un avantage de la présente invention réside dans le fait qu'à la fermeture du clapet secondaire, après une ouverture consécutive à l'ouverture du clapet principal, la pression P_{c} régnant dans la chambre interne est supérieure à la pression extérieure Pₑ régnant dans le milieu ambiant. Cette différence de pression P_{c}-Pₑ positive empêche toute introduction de particules solides dans ladite chambre interne. Même pendant la fermeture du clapet secondaire, des bulles de gaz sont présentes au-dessous de la tête du clapet secondaire, ce qui crée une barrière pour lesdites particules solides en suspension dans le milieu ambiant. La présence de bulles de gaz est également effective lorsque la pression P_{c} est égale à la pression Pₑ en raison du contact métal-métal du clapet secondaire sur son siège ce qui impose une étanchéité non parfaite entre le milieu ambiant et la chambre interne de la soupape différentielle. De ce fait, on minimise grandement le dépôt de calcaire sur les éléments constitutifs de la soupape tels que le clapet principal, les ressorts, etc.

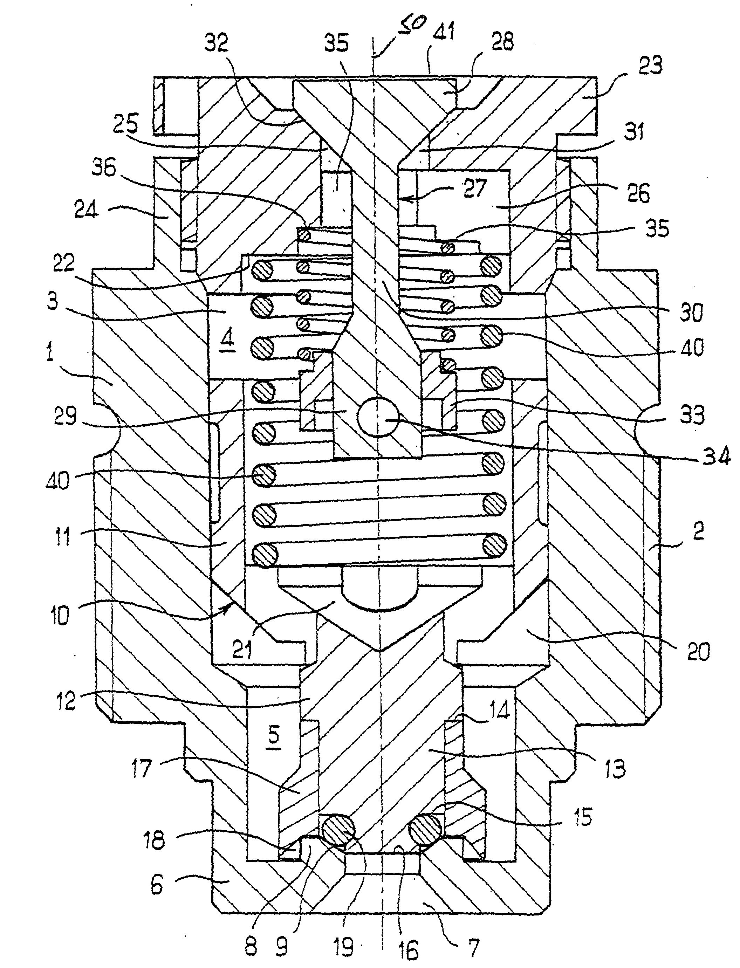

La soupape différentielle à deux clapets telle que représentée sur la figure comprend un corps de soupape 1 qui est muni d'un filetage 2 pour être vissé sur un élément correspondant d'une conduite flexible, non représentée. Dans le corps de soupape 1 est ménagée une chambre interne 3 qui peut être constituée par deux chambres supérieure 4 et inférieure 5 et dont les dimensions internes peuvent être différentes mais qui sont en communication permanente.

Dans le fond 6 du corps de soupape 1 est ménagé un conduit de communication 7 qui relie la chambre inférieure 5 à l'intérieur de la conduite flexible ou plus exactement à l'annulaire de ladite conduite flexible dans lequel diffuse un gaz à évacuer, ledit gaz étant à une certaine pression qu'on désigne par la pression interne Pᵢ et provenant du fluide circulant dans la conduite flexible. Sur une portée 8 du fond 6 est ménagé un siège conique 9.

Un clapet principal 10 est monté dans le corps de soupape 1 et comprend une partie haute 11 dont le diamètre externe est sensiblement égal au diamètre interne de la chambre supérieure 4 mais avec une tolérance suffisante pour permettre le déplacement du clapet dans ladite chambre 4. La partie basse 12 du clapet principal 10 comprend une partie cylindrique de petit diamètre 13 délimitée par un rebord annulaire 14 et une gorge annulaire 15 ménagée à l'extrémité inférieure 16. Un déflecteur 17 est monté de manière solidaire sur la partie cylindrique 13 et comprend une jupe 18 qui entoure la partie 8 du fond 6. Un joint torique 19 est logé dans la gorge annulaire 15 et qui est, pour la position de fermeture du clapet principal 10, en appui sur le siège conique 9. Le déflecteur 17 étant en appui sur la partie 8 dont le diamètre est supérieur à la partie cylindrique du conduit de communication 7, il s'ensuit que le joint torique 19, n'est pas comprimé au-delà d'un certain taux pour lequel il assure l'étanchéité totale entre la chambre interne 3 et l'annulaire de la conduite flexible dans lequel diffuse le gaz et ce, quelle que soit la différence P_{c}-Pᵢ. De ce fait, on évite une usure prématurée du joint torique 19 qui pourrait apparaître après un grand nombre de phases d'ouverture et fermeture du clapet principal 10. Une telle conception d'un joint torique 19 et d'un siège conique 9 permet de fabriquer l'extrémité inférieure 16 et le siège conique avec des tolérances de fabrication différentes car il se produira toujours un contact étanche du joint torique 19 sur le siège conique 9, ce qui évite l'appairage des éléments constitutifs. Il est évident qu'en lieu et place du joint torique, on peut utiliser un joint plat qui présenterait la même fonction d'étanchéité, à condition de ménager un siège correspondant sur la portée 8 du fond 6 du corps de soupape 1. Dans la partie haute 11 du clapet 10 sont ménagés, de préférence, quatre passages 20 disposés à 90° les uns des autres et dont deux sont représentés sur la figure. Un ressort principal 40 est précontraint avec une force de tarage de l'ordre de 0,9 da.N dans la forme de réalisation représentée sur la figure unique. Le ressort principal 40 est logé dans la partie haute 4 de la chambre 3 en prenant appui par une extrémité sur une pièce 21 et par l'autre extrémité sur un épaulement 22 d'un couvercle 23. Le tarage du ressort 40 et la section du clapet principal 10 sont déterminés pour que la fermeture dudit clapet 10 soit effective pour une différence P_{c}-Pᵢ égale à 3 bars ± 0,5 bar.

Le couvercle 23 qui est vissé dans la partie supérieure 24 du corps de soupape 1 comprend au moins un passage de communication central 25 qui relie l'intérieur de la chambre interne 3 au milieu ambiant extérieur. D'autres passages de communication 26, par exemple au nombre de trois disposés à 120°, peuvent être également prévus dans le couvercle 23.

Un clapet secondaire 27 est monté en alignement avec le clapet principal 10 sur l'axe de symétrie 50 desdits clapets 10 et 27. Le clapet secondaire comprend une tête 28 cylindre-conique et une base 29 reliées par une tige centrale 30 de plus petit diamètre, et est monté dans le passage de communication central 25. La partie conique 31 de la tête 28 prend appui, en position de fermeture, sur un siège secondaire conique 32 dont l'inclinaison est environ de 45°. De préférence, la longueur de la partie conique 31 est très supérieure à celle du siège conique 32, de façon, entre autres, qu'à la fermeture on soit certain d'un contact entre la tête de clapet 28 sur le siège conique 32. Une pièce d'appui fixe 33 est fixée par une goupille 34 à la base 29. Un petit ressort secondaire 35 sollicite le clapet secondaire 27 vers la position de fermeture et prend appui par une extrémité sur la pièce d'appui fixe 33 et par son autre extrémité sur un épaulement intérieur 36 ménagé dans le couvercle 23. Le petit ressort secondaire 35 est logé dans le ressort principal 40, de préférence de manière concentrique. Le tarage du ressort secondaire 27 est de l'ordre de 0,3 da.N. Bien entendu, il est possible de réaliser la tête 28 du clapet secondaire sous la forme d'une tête plate avec un siège plat, mais de telle sorte qu'une étanchéité parfaite ne soit pas obtenue, de manière à permettre le passage de bulles gazeuses en surpression par rapport à la pression du milieu ambiant. Le clapet secondaire 27 s'ouvre et se ferme en fonction de la différence de pression P_{c} régnant dans la chambre 26 et la pression externe Pₑ.

Le fonctionnement de la soupape selon l'invention est le suivant.

Dès que la différence prédéterminée ΔP₁ entre les pressions Pᵢ et P_{c} est égale ou supérieure par exemple à 3 bars ± 0,5 bar, le clapet principal 10 s'ouvre. Dès l'ouverture du clapet principal 10, le clapet secondaire 27 s'ouvre en raison de l'augmentation de la pression régnant dans la chambre 3, le tarage de 0,3 da.N et la raideur du ressort 35 n'étant pas suffisants pour empêcher ladite ouverture du clapet secondaire 27. Le gaz introduit dans la chambre 3 à la suite de l'ouverture du clapet principal 10, s'échappe dans le milieu ambiant par les passages de communication 25 et 26.

Dès que la pression P_{c} chute jusqu'à une valeur prédéterminée, par exemple 300,2 bars pour une pression extérieure Pₑ égale à 300 bars, le clapet secondaire 27 se referme, le ressort secondaire 35 le ramenant vers la position de fermeture. Le clapet secondaire 27 n'étant pas étanche sur son siège, des bulles de gaz se forment entre le clapet secondaire 27 et le siège 32, de sorte que lesdites bulles constituent une barrière à la pénétration de l'eau ou de particules solides dans la chambre 3. Ainsi, on évite non seulement un dépôt éventuel de calcaire mais également une détérioration des éléments constitutifs par suite d'une action des particules solides et/ou de l'eau.

Le clapet principal 10 reste ouvert même après la fermeture du clapet secondaire 27, tant que la différence ΔP₁ de pression entre la pression interne Pᵢ et la pression P_{c} dans la chambre est supérieure à la force de tarage et à la raideur du ressort principal 40. Dès que la différence ΔP₁ chute à une certaine valeur déterminée par les forces et les sections en présence, alors le clapet principal 10 se referme en réalisant une étanchéité suffisante, grâce au joint torique.

Dans l'exemple représenté, les valeurs suivantes ont été choisies pour une géométrie donnée des éléments constitutifs de la soupape différentielle selon l'invention :
- tarage du ressort principal T₁ : 0,9 da.N,
- tarage du ressort secondaire T₂ : 0,3 da.N,
- raideur du ressort principal R₁ : 4 mm de course pour un Δf (différence de force) de 0,7 da.N,
- raideur du ressort secondaire R₂ : 4 mm de course pour un Δf (différence de force) de 0,2 da.N,
- différence de pressions P_{c}-Pₑ = ΔP₂ = 0,2 bar,
- différence de pressions Pᵢ-P_{c} = 3 bars ± 0,5 bar.

Bien entendu, les valeurs ci-dessus peuvent varier dans de larges limites.

Le rapport T₁/T₂ est toujours supérieur à 1 et inférieur à 4 et la raideur R₂ est inférieure à la raideur R₁.

## Revendications

1. Soupape différentielle pour conduite flexible sous-marine dans laquelle circule un fluide sous une pression interne (Pᵢ), ladite soupape étant soumise d'un côté à une pression extérieure (Pₑ) et de l'autre côté à la pression interne (Pᵢ) de ladite conduite flexible, du type comprenant :
- un corps de soupape (1) comprenant une partie supérieure communiquant avec l'extérieur par au moins un passage de communication supérieur (25) et une partie inférieure communiquant avec au moins un annulaire de la conduite flexible par au moins un conduit de communication (7),
- une chambre interne (3) ménagée dans le corps de soupape (1) et dans laquelle règne une pression de chambre (P_{c}),
- un clapet principal (10) qui est monté dans ladite chambre interne (3) et qui est susceptible d'occuper une position de fermeture et une position d'ouverture, ledit clapet principal (10) étant sollicité vers la position de fermeture par un ressort principal (40) qui est taré avec une force de tarage prédéterminée,
- un clapet secondaire (27), coaxial au clapet principal (10) et prenant appui sur un siège de clapet (32), ledit clapet secondaire étant sollicité par un ressort secondaire (35) qui est taré avec une force de tarage inférieure à la force de tarage du ressort principal,
**caractérisée en ce que** l'appui du clapet secondaire (27) sur son siège (32) n'est pas étanche, de manière à permettre, la formation de bulles de gaz qui constituent une barrière à une pénétration d'eau ou de particules solides dans la chambre interne (3), et **en ce que** le rapport des forces de tarage du ressort principal et du ressort secondaire est inférieur à 4, ledit clapet secondaire (27) monté dans le passage de communication supérieur (25) et susceptible d'occuper une position de fermeture et une position d'ouverture étant sollicité vers la position de fermeture par ledit ressort taré (35) de sorte que la pression de la chambre interne (Pc) ne soit pas inférieure à la pression extérieure (Pe) pour la position de fermeture dudit clapet secondaire (27).

2. Soupape selon la revendication 1, **caractérisée en ce qu'**elle comprend un couvercle (23) qui est monté à la partie supérieure (24) du corps de soupape (1) et qui comporte le passage de communication supérieur (25) et un siège secondaire (32) pour le clapet secondaire (27).

3. Soupape selon la revendication 1 ou 2, **caractérisée en ce que** le clapet secondaire (27) comprend une tête (28) présentant une section au moins partiellement conique qui vient en appui sur le siège conique (32) et **en ce que** le petit ressort (35) prend appui par une extrémité sur un épaulement intérieur (36) ménagé sur le couvercle (23) et par l'autre extrémité sur une pièce fixe (33) qui est montée autour de la partie inférieure du clapet secondaire, ladite pièce fixe étant solidaire de ladite partie inférieure du clapet secondaire.

4. Soupape selon l'une des revendications 1 à 3, **caractérisée en ce que** la force de tarage du petit ressort est comprise est d'environ 0,3 da.N.

5. Soupape selon la revendication 1, **caractérisée en ce que** le joint d'étanchéité (19) est torique et prend appui sur une partie conique d'un siège principal (9) ménagé dans le fond (6) du corps de soupape (1).

6. Soupape selon la revendication 1 ou 5, **caractérisée en ce que** le clapet principal (10) comprend un corps de clapet dont la partie inférieure est logée au moins en partie dans un déflecteur (17).

7. Soupape selon l'une des revendications 1 à 6, **caractérisée en ce que** le petit ressort taré (35) est logé dans le ressort principal (40).

8. Soupape selon l'une des revendications 1 à 7, **caractérisée en ce que** le tarage du ressort principal (40) est d'environ 0,9 da.N.

9. Soupape selon la revendication 1, **caractérisée en ce que** la tête (28) du clapet secondaire (27) et le siège correspondant (32) sont plats.

## Claims

1. Differential valve for a sub-sea flexible pipe through which there flows a fluid under an internal pressure (Pi), the said valve being subjected, on one side, to an exterior pressure (Pₑ) and, on the other side, to the internal pressure (Pᵢ) of the said flexible pipe, of the type comprising:
- a valve body (1) comprising an upper part communicating with the outside via at least one upper communication passage (25) and a lower part communicating with at least one annulus of the flexible pipe via at least one communication duct (7),
- an internal chamber (3) formed in the valve body (1) and in which a chamber pressure (P_{c}) obtains,
- a main clacker element (10) which is mounted in the said internal chamber (3) and which is capable of occupying a closed position and an open position, the said main clacker element (10) being urged towards the closed position by a main spring (40) which is preloaded with a predetermined preload,
- a secondary clacker element (27), coaxial with the main clacker element (10) and resting on a valve seat (32), the said secondary clacker element being urged by a secondary spring (35) which is preloaded with a preload which is lower than the preload on the main spring,
**characterized in that** the secondary clacker element (27) rests on its seat (32) not in a sealed manner but in such a way as to allow the formation of bubbles of gas which constitute a barrier to the ingress of water or solid particles into the internal chamber (3), and **in that** the ratio of the preload of the main spring and of the secondary spring is below 4, said secondary clacker element (27) mounted in the upper communication passage (25) and capable of occupying a closed position and an open position, being urged towards the closed position by said preloaded spring (35) so that the internal pressure (Pc) of the internal chamber is not below the exterior pressure (Pe) for the closed position of said secondary clacker element (27).

2. Valve according to Claim 1, **characterized in that** it comprises a cover (23) which is mounted at the upper part (24) of the valve body (1) and which includes the upper communication passage (25) and a secondary seat (32) for the secondary clacker element (27).

3. Valve according to Claim 1 or 2, **characterized in that** the secondary clacker element (27) comprises a head (28) which has an at least partially conical cross section which comes to rest on the conical seat (32), and **in that** the small spring (35) rests via one end on an interior shoulder (36) formed on the cover (23), and via the other end on a fixed piece (33) which is mounted around the lower part of the secondary clacker element, the said fixed part being secured to the said lower part of the secondary clacker element.

4. Valve according to one of Claims 1 to 3, **characterized in that** the preload on the small spring is approximately 0.3 da.N.

5. Valve according to Claim 1, **characterized in that** the seal (19) is an O-ring seal and rests against a conical part of a main seat (9) formed in the bottom (6) of the valve body (1).

6. Valve according to Claim 1 or 5, **characterized in that** the main clacker element (10) comprises a clacker element body, the lower part of which is at least partially housed in a deflector (17).

7. Valve according to one of Claims 1 to 6, **characterized in that** the small preloaded spring (35) is housed inside the main spring (40).

8. Valve according to one of Claims 1 to 7, **characterized in that** the preload on the main spring (40) is approximately 0.9 da.N.

9. Valve according to Claim 1, **characterized in that** the head (28) of the secondary clacker element (27) and the corresponding seat (32) are flat.

## Patentansprüche

1. Differentialventil für eine flexible Unterwasserleitung, in der ein Fluid mit einem Innendruck (Pi) zirkuliert, wobei das Ventil auf der einen Seite einem Außendruck (Pe) und auf der anderen Seite dem Innendruck (Pi) der flexiblen Leitung ausgesetzt ist, bestehend aus:
- einem Ventilkörper (1) mit einem oberen Abschnitt, der mit dem Äußeren durch wenigstens einen oberen Verbindungskanal (25) in Verbindung steht, und mit einem unteren Abschnitt, der mit wenigstens einem Ringraum der flexiblen Leitung durch wenigstens eine Verbindungsleitung (7) in Verbindung steht,
- einer inneren Kammer (3), die im Ventilkörper (1) ausgebildet ist und in der ein Kammerdruck (Pc) herrscht,
- einem Hauptventilglied (10), das in der inneren Kammer (3) angeordnet ist und eine Schließ- und eine Öffnungsstellung einnehmen kann, wobei das Hauptventilglied (10) durch eine Hauptfeder (40), die mit einer bestimmten Einstellkraft eingestellt ist, in die Schließstellung beaufschlagt ist,
- einem zweiten Ventilglied (27), das zum Hauptventilglied (10) koaxial ist und das an einem Ventilsitz (32) anliegt, wobei das zweite Ventilglied durch eine zweite Feder (35) beaufschlagt ist, die mit einer Einstellkraft eingestellt ist, die niedriger als die Einstellkraft der Hauptfeder ist,
**dadurch gekennzeichnet, daß**
das Anliegen des zweiten Ventilglieds (27) auf seinen Sitz (32) nicht dicht ist, so daß die Bildung von Gasblasen ermöglicht wird, die eine Barriere gegen das Eindringen von Wasser oder Feststoffpartikeln in die innere Kammer (3) bilden, und daß das Verhältnis der Einstellkräfte der Hauptfeder und der zweiten Feder geringer als 4 ist, wobei das zweite Ventilglied (27), das im oberen Verbindungskanal (25) angeordnet ist und eine Schließ- und eine Öffnungsstellung einnehmen kann, in die Schließstellung von der Feder (35) beaufschlagt ist, die derart eingestellt ist, daß der Druck (Pc) in der inneren Kammer nicht geringer als der Außendruck (Pe) für die Schließstellung des zweiten Ventilglieds (27) ist.

2. Ventil nach Anspruch 1, **dadurch gekennzeichnet, daß** es einen Deckel (23) aufweist, der am oberen Abschnitt (24) des Ventilkörpers (1) befestigt ist und den oberen Verbindungskanal (25) und einen zweiten Sitz (32) für das zweite Ventilglied (27) umfasst.

3. Ventil nach Anspruch 1 oder 2, **dadurch gekennzeichnet, daß** das zweite Ventilglied (27) einen Kopf (28) hat, der einen wenigstens teilweise konischen Querschnitt hat, der am konischen Sitz (32) anliegt, und daß die kleine Feder mit einem Ende an einer unteren Schulter (36) anliegt, die im Deckel (23) ausgebildet ist, und mit dem anderen Ende an einem festen Teil (33), das um den unteren Abschnitt des zweiten Ventilglied befestigt ist, wobei das feste Teil mit dem unteren Abschnitt des zweiten Ventilglieds verbunden ist.

4. Ventil nach einem der Ansprüche 1 bis 3, **dadurch gekennzeichnet, daß** die Einstellkraft der kleinen Feder etwa 0,3 da.N. beträgt.

5. Ventil nach Anspruch 1, **dadurch gekennzeichnet, daß** die Dichtung (19) torisch ist und an einem konischen Abschnitt eines Hauptventilsitzes (9) anliegt, der im Boden (6) des Ventilkörpers (1) ausgebildet ist.

6. Ventil nach Anspruch 1 oder 5, **dadurch gekennzeichnet, daß** das Hauptventilglied (10) einen Ventilgliedkörper hat, dessen unterer Abschnitt wenigstens teilweise in einem Ablenkelement (17) angeordnet ist.

7. Ventil nach einem der Ansprüche 1 bis 6, **dadurch gekennzeichnet, daß** die kleine Einstellfeder (35) in der Hauptfeder (40) angeordnet is.

8. Ventil nach einem der Ansprüche 1 bis 7, **dadurch gekennzeichnet, daß** die Hauptfeder (40) auf etwa 0,9 da.N. eingestellt ist.

9. Ventil nach Anspruch 1, **dadurch gekennzeichnet, daß** der Kopf (28) des zweiten Ventilglieds (27) und der entsprechende Sitz (32) eben sind.
